(19) Europäisches Patentamt
European Patent Office
Office européen des brevets

(11) **EP 1 139 328 B1**

(12) **EUROPEAN PATENT SPECIFICATION**

(45) Date of publication and mention
of the grant of the patent:
**18.08.2004 Bulletin 2004/34**

(51) Int Cl.[7]: **G09G 3/36**

(21) Application number: **01100983.4**

(22) Date of filing: **17.01.2001**

(54) **Liquid crystal display device implementing gray scale based on digital data as well as portable telephone and portable digital assistance device provided with the same**

Flüssigkristallanzeige mit auf digitalen Daten basierten Graustufen, tragbares Telefon und tragbarer persönlicher Hilfsrechner

Dispositif d'affichage à cristaux liquides à échelle de gris basée sur des données numériques, téléphone portatif et assistant numérique personnel portatif

(84) Designated Contracting States:
**DE FR GB**

(30) Priority: **31.03.2000 JP 2000098110**

(43) Date of publication of application:
**04.10.2001 Bulletin 2001/40**

(73) Proprietor: **MITSUBISHI DENKI KABUSHIKI KAISHA
Tokyo 100-8310 (JP)**

(72) Inventors:
• **Tokioka, Hidetada
Chiyoda-ku, Tokyo 100-8310 (JP)**
• **Agari, Masafumi
Chiyoda-ku, Tokyo 100-8310 (JP)**
• **Murai, Hiroyuki
Chiyoda-ku, Tokyo 100-8310 (JP)**
• **Inoue, Mitsuo
Chiyoda-ku, Tokyo 100-8310 (JP)**

(74) Representative: **Sajda, Wolf E., Dipl.-Phys. et al
MEISSNER, BOLTE & PARTNER
Widenmayerstrasse 48
80538 München (DE)**

(56) References cited:
**EP-A- 0 597 536        WO-A-00/08626
US-A- 5 977 940**

• **PATENT ABSTRACTS OF JAPAN vol. 1997, no. 09, 30 September 1997 (1997-09-30) & JP 09 113933 A (MATSUSHITA ELECTRIC IND CO LTD), 2 May 1997 (1997-05-02)**
• **PATENT ABSTRACTS OF JAPAN vol. 015, no. 205 (P-1206), 27 May 1991 (1991-05-27) & JP 03 053218 A (NIPPON TELEGR & TELEPH CORP), 7 March 1991 (1991-03-07)**

EP 1 139 328 B1

## Description

BACKGROUND OF THE INVENTION

Field of the Invention

The present invention relates to liquid crystal display devices for displaying an image using a liquid crystal and, more specifically, to a liquid crystal display device implementing a gray scale.

Description of the Background Art

Recently, liquid crystal display devices are used as display panels for a personal computer, television receiver, portable telephones and the like. The liquid crystal display device has an advantage over a conventional display device because of its low power consumption and compactness.

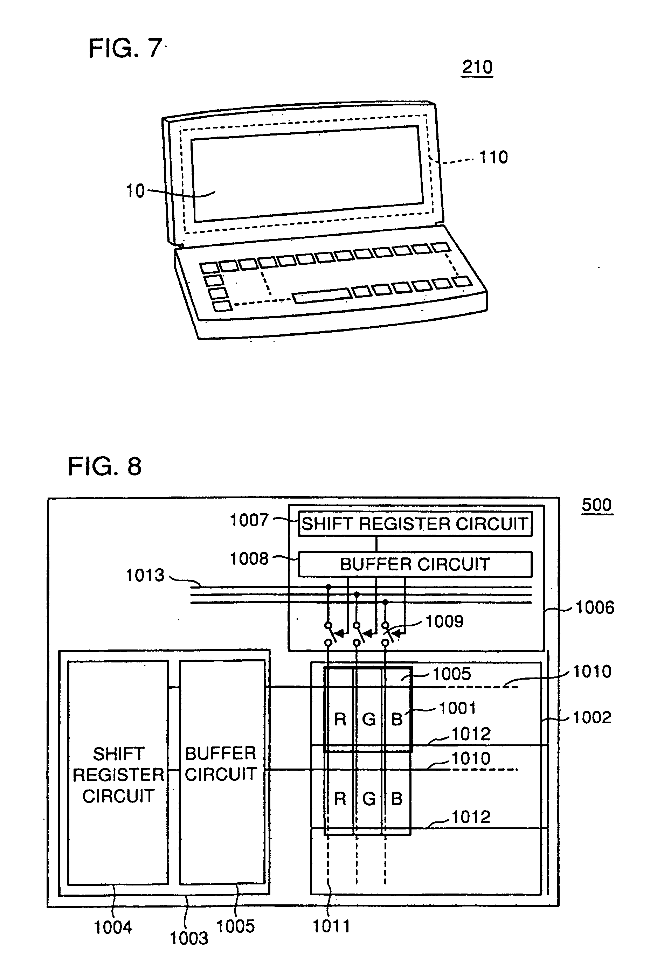

Fig. 8 is a block diagram showing an overall structure of a conventional liquid crystal display device 500.

Referring to Fig. 8, liquid crystal display device 500 is provided with a liquid crystal display portion 1002 including a plurality of pixels 1001 arranged in a matrix. In a color liquid crystal display device, one pixel 1001 consists of pixels 1005 of R (Red), G (Gray) and B (Blue). It is noted that, in the following description, the pixel corresponding to the above mentioned reference numeral 1005 is referred to as "pixel."

Pixels 1005 are arranged in a matrix in liquid crystal display portion 1002. Liquid crystal display device 500 further includes vertical scanning lines 1010 and common lines 1012 arranged corresponding to rows of pixels and horizontal scanning lines 1011 arranged corresponding to columns of pixels.

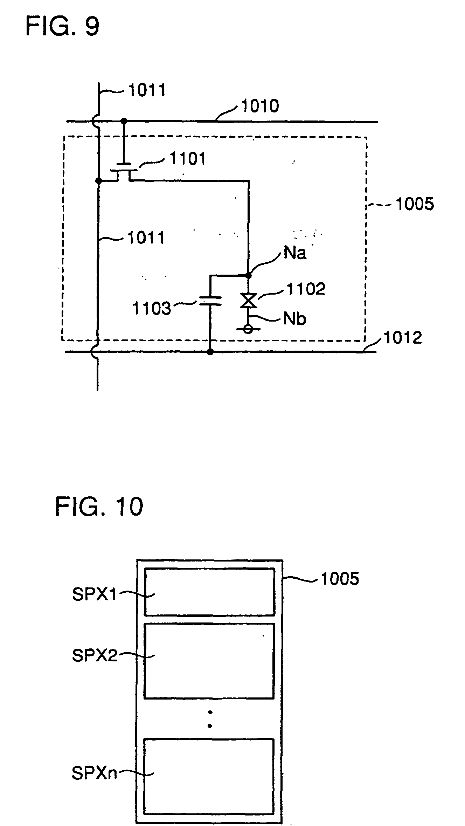

Fig. 9 is a circuit diagram showing a structure of pixel 1005.

Referring to Fig. 9, pixel 1005 includes a liquid crystal display element 1102 having a pixel electrode and a common electrode arranged opposite to each other. Nodes respectively connected to the pixel electrode and common electrode of the liquid crystal display element are hereinafter referred to as a pixel electrode node Na and a common electrode node Nb.

The orientation of liquid crystal molecules in the liquid crystal display element changes in accordance with the potential difference between pixel electrode node Na and common electrode node Nb. The luminance of the liquid crystal display element thereby changes, enabling the luminance of each pixel to be controlled.

Pixel 1005 further includes: a storage capacitor 1103 arranged between pixel electrode node Na and common line 1012; and a TFT (Thin Film Transistor) element 1101 having its gate connected to vertical scanning line 1011 and electrically connected between signal line 1011 and pixel electrode node Na.

In pixel 1005, a positive voltage is applied to vertical scanning line 1010 (activation), so that TFT element 1101 is turned on and the potential level of horizontal scanning line 1011 is transmitted to pixel electrode node Na. Liquid crystal display element 1102 per se has a capacitance, and therefore liquid crystal display element 1102 and storage capacitor 1103 are charged with electricity by turning on TFT element 1101.

If vertical scanning line 1010 is inactivated and TFT element 1001 is turned off, on the other hand, the potential level of pixel electrode node Na is retained by storage capacitor 1103.

Returning to Fig. 8, liquid crystal display device 500 further includes a vertical scanning circuit 1003 for sequentially selecting the rows of pixels with a prescribed period, and a horizontal scanning circuit 1006 for supplying a display signal, which is a voltage signal corresponding to display data, to each column of pixels.

Vertical scanning circuit 1003 includes a shift register circuit 1004 and a buffer circuit 1005, and sequentially activates vertical scanning lines 1010 and applies a positive voltage thereto for sequentially selecting the rows of pixels with a prescribed period.

Horizontal scanning circuit 1006 includes a shift register circuit 1007 and a buffer circuit 1008 for sequentially selecting the columns of pixels with a prescribed period, as well as a switch 1009 arranged between display signal line 1013 and horizontal scanning line 1011. Switch 1009 is arranged corresponding to each row of pixels for connecting/disconnecting corresponding display signal line 1013 and horizontal scanning line 1011. Switches 1009 are sequentially turned on in accordance with a signal with a prescribed period. Display signal lines 1013 are respectively arranged for three pixels of R, G and B since liquid crystal display device 500 is a color display device.

Once display signals are written to pixels in one row of pixels by horizontal scanning circuit 1006, i. e., one row of pixels is scanned, vertical scanning circuit 1003 inactivates vertical scanning line 1010 that has been selected so far and applies a 0 or negative voltage thereto for selecting next row of pixels, and activates the following vertical scanning line 1010 and applies a positive voltage thereto.

The next row of pixels is similarly scanned. When vertical scanning circuit 1003 scans all rows of pixels (this is also referred to as 1 frame), the leading vertical scanning line 1012 is again activated and a positive voltage is applied thereto. Thus, an image is displayed by sequentially writing display signals to all pixels in one frame.

As described above, in conventional liquid crystal display device 500, the luminance of each pixel corresponds to the potential level of pixel electrode node Na. Thus, an analog signal of a potential level corresponding to a gradation tone must be written from a horizontal scanning line to pixel electrode node Na to implement a gray scale of the pixels. Accordingly, digital/analog conversion is required if display data which is externally input to the liquid crystal display device is digital data.

A so-called area ratio gray scale method of dividing each pixel into a plurality of portions is known to provide a structure of implementing the gray scale in accordance with a display signal which is a digital signal.

Fig. 10 is a diagram used for explaining a concept of the area ratio gray scale method.

Referring to Fig. 10, pixel 1005 is divided into a plurality of sub pixels SPX1 to SPXn (n: natural number) in the area ratio gray scale method. Each of sub pixels SPX1 to SPXn is independently turned on (maximum luminance) and off (minimum luminance) in accordance with a digital signal. Accordingly, if a sub pixel to be turned on is selected in accordance with the display signal of digital data in each pixel 1005, a gray scale is achieved in proportion to the area of the selected sub pixel.

However, the area ratio gray scale method suffers from a problem that the pixel must be divided into a larger number of portions to increase the number of gradations. The increase in the number of sub pixels results in a greater pixel, whereby display resolution and quality are disadvantageously reduced.

EP-A-0 597 536 discloses a liquid crystal display device, comprising a plurality of vertical scanning lines and a plurality of horizontal scanning lines arranged in a matrix; and a plurality of pixels arranged in a matrix (liquid crystal display device with row and column address conductors and picture elements), each of the plurality of pixels including M (M = natural number of at least 2) sub pixels, each of the sub pixels corresponding to one of the plurality of vertical scanning lines and one of the plurality of horizontal scanning lines, each of the sub pixels including a liquid crystal display element, and a common electrode and a pixel electrode arranged on either side of the liquid crystal display element (display sub-elements with sub-electrodes and correspondence to row and column address conductors), each of the pixels further including a sub pixel connection switch arranged between the pixel electrodes belonging to two of the M sub pixels, the sub pixel connection switch corresponding to one of the plurality of vertical scanning lines and one of the plurality of horizontal scanning lines and being adapted to be controllably turned on/off in accordance with potential levels of the corresponding vertical scanning line and the horizontal scanning line.

JP 09 1133933 A discloses a liquid crystal display device comprising a plurality of vertical scanning lines and a plurality of horizontal scanning lines arranged in a matrix; and a plurality of pixels arranged in a matrix, each of the plurality of pixels including M (M = natural number of at least 2) sub pixels, each of the sub pixels corresponding to one of the plurality of vertical scanning lines and one of the plurality of horizontal scanning lines, each of the sub pixels including a liquid crystal display element, and a common electrode and a pixel electrode arranged on either side of the liquid crystal display element, each of the pixels further including a sub pixel connection switch arranged between the pixel electrodes belonging to two of the M sub pixels, the sub pixel connection switch corresponding to one of the plurality of vertical scanning lines and one of the plurality of horizontal scanning lines and being adapted to be controllably turned on/off in accordance with potential levels of the corresponding vertical scanning line and the horizontal scanning line.

JP 03 053218 A discloses a liquid crystal display device comprising a plurality of vertical scanning lines and a plurality of horizontal scanning lines arranged in a matrix; and a plurality of pixels arranged in a matrix, each of the plurality of pixels including M (M = natural number of at least 2) sub pixels, each of the sub pixels corresponding to one of the plurality of vertical scanning lines and one of the plurality of horizontal scanning lines, each of the sub pixels including a liquid crystal display element, and a common electrode and a pixel electrode arranged on either side of the liquid crystal display element, each of the pixels further including a sub pixel connection switch arranged between the pixel electrodes belonging to two of the M sub pixels, the sub pixel connection switch corresponding to one of the plurality of vertical scanning lines and one of the plurality of horizontal scanning lines and being adapted to be controllably turned on/off in accordance with potential levels of the corresponding vertical scanning line and the horizontal scanning line.

## SUMMARY OF THE INVENTION

An object of the present invention is to provide a liquid crystal display device cap able of implementing a multiple-gray scale by digital data without impairing a display quality such as resolution.

Another object of the present invention is to provide a portable telephone and portable information assistance device provided with a liquid crystal display portion capable of implementing a multiple-gray scale by digital data without impairing a display quality and continuously displaying the same image with low power consumption.

In short, the present invention is a liquid crystal display device including a plurality of vertical and horizontal scanning lines and a plurality of pixels in accordance with claim 1.

According to another aspect, the present invention is the use of a liquid crystal display device according to claim 1 in a portable telephone.

According to another aspect, the present invention is the use of a liquid crystal display device according to claim 1 in a portable digital assistance device.

The liquid crystal display portion displays information in accordance with a digital signal.

Accordingly, a main advantage of the present invention is that the number of gradation tones can be increased by a switch connecting the pixel electrodes of the sub pixels when a gray scale is to be achieved in each pixel by turning on/off each sub pixel based on digital data.

Further, in the liquid crystal display portion, the number of gradations can be increased in accordance with a digital signal, and one of the first and second reference potential lines can be periodically connected to the pixel electrode of each sub pixel in accordance with the potential level retained at the internal node by the capacitor for control. Thus, when continuously displaying the same image, a writing operation at a high frequency for driving vertical and horizontal scanning lines needs not be performed. As a result, power consumption of the portable telephone and portable digital assistance device can be reduced.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram showing an overall structure of a liquid crystal display device 100 according to the first embodiment of the present invention.
Fig. 2 is a diagram used for explaining a concept of connection between sub pixels in liquid crystal display device 100.
Fig. 3 is a diagram used for explaining a concept of connection between the sub pixels when each pixel is divided into three sub pixels.
Fig. 4 is a block diagram schematically showing an overall structure of a liquid crystal display device 110 according to the second embodiment of the present invention.
Fig. 5 is a circuit diagram shown in conjunction with a structure of a sub pixel according to the second embodiment.
Fig. 6 is an illustration showing a portable telephone 200 according to a modification of the second embodiment.
Fig. 7 is an illustration showing a portable digital assistance device 210 according to the modification of the second embodiment.
Fig. 8 is a block diagram showing an overall structure of a conventional liquid crystal display device 500.
Fig. 9 is a circuit diagram showing a structure of a pixel 1005.
Fig. 10 is a diagram used for explaining a concept of the area ratio gray scale method.

DESCRIPTION OF THE PREFERRED EMBODIMENTS

The embodiments of the present invention will now be described in detail with reference to the drawings.

First Embodiment

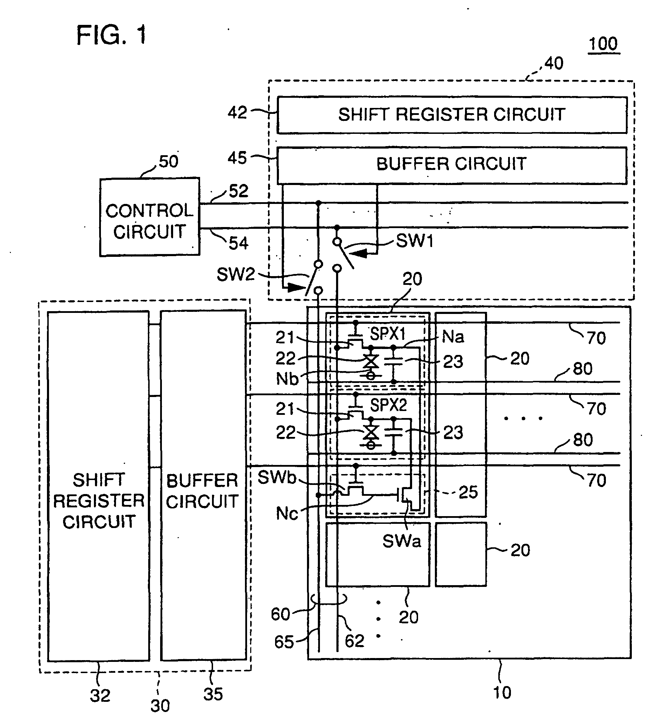

Fig. 1 shows a block diagram showing an overall structure of a liquid crystal display device 100 according to the first embodiment of the present invention.

The liquid crystal display device of the present invention can be applied to any of color and monochromic liquid crystal display devices, and therefore the structure of each pixel (corresponding to pixel 1005 in Fig. 8) will be described in the following.

When liquid crystal display device 100 is used for displaying a color image, a color filter of one of R, G and B is provided for each of pixels having similar structures, and three pixels form one display unit.

Referring to Fig. 1, liquid crystal display device 100 is provided with a liquid crystal display portion 10 including a plurality of pixels 10 arranged in a matrix. Each pixel 20 includes sub pixels SPX1 and SPX2 as well as a sub pixel connection circuit 25. Although not shown in the drawing, each of the other pixels 20 arranged in a matrix is divided into sub pixels SPX1 and SPX2 and provided with sub pixel connection switch circuit 25.

Accordingly, sub pixels SPX1, SPX2 and sub pixel connection circuit 25 are arranged in a matrix over liquid crystal display portion 10. An independent vertical scanning line 70 is arranged corresponding to each row of sub pixels and sub pixel connection circuits. Further, a horizontal scanning line 60 is arranged corresponding to each column of pixels.

In the example shown in Fig. 1, pixel 20 is divided in a horizontal direction, so that horizontal scanning line 60 is shared by sub pixels SPX1, SPX2 and sub pixel connection circuit 25.

Horizontal scanning line 60 includes a first data line 62 transmitting data corresponding to a display signal and a second data line 65 transmitting a sub pixel connection signal for controlling connection between the sub pixels. Further, a common line 80 is arranged corresponding to each column of sub pixels. Common line 80 supplies a corresponding potential to a common electrode node Nb.

Sub pixel SPX1 further includes: a liquid crystal display element 22; a storage capacitor 23 arranged between a pixel electrode node Na and common line 80; and a TFT element 21 having its gate connected to vertical scanning line 70 and electrically connected between first data line 62 and pixel electrode node Na. TFT element 21 is exemplified as the switch element.

TFT element 21, liquid crystal display element 22 and storage capacitor 23 respectively correspond to TFT element 1101, liquid crystal display element 1102 and storage capacitor 1103 described with reference to Fig. 9. Similarly, vertical scanning line 70, common line 80 and first data line 62 respectively correspond to vertical scanning line 1010, common line 1012 and horizontal scanning line 1011 in Fig. 7. The other sub pixels have a structure similar to that of sub pixel SPX1.

Vertical scanning circuit 30 corresponds to vertical scanning circuit 1103 described with reference to Fig. 8 and sequentially activates vertical scanning lines 70 with a prescribed period and applies a positive voltage thereto.

A control circuit 50 outputs a sub pixel connection signal to a sub pixel connection select signal line 52 and outputs a display signal to a display signal line 54. Horizontal scanning circuit 40 includes a shift register circuit 42, a buffer circuit 45, a switch SW1 arranged between display signal line 54 and first data signal 62, and a switch SW2 arranged between sub pixel connection select signal line 52 and a second data line 65.

Switches SW1 and SW2 are arranged for every column of pixels. Switches SW1 and SW2 arranged corresponding to each column of pixels are sequentially turned on by shift register circuit 42 and buffer circuit 45. Horizontal scanning circuit 40 supplies a corresponding display signal and sub pixel connection signal to each column of pixels through first and second data signals 62 and 65.

In the case of a so-called point at a time method, sub pixels in one row are supplied with display signals by horizontal scanning circuit 40 and charged with electricity. When the display signals are supplied to the sub pixels in one row, vertical scanning circuit 30 switches among vertical scanning lines 70 to be activated for selecting next row. Thus, vertical scanning line 70 which has been activated so far is inactivated so that the potential level thereof attains to 0 or a negative voltage. Thus, corresponding TFT element 21 is turned off and the potential level of pixel electrode node Na is retained.

Liquid crystal display device 100 has a circuit structure allowing a display signal to be independently supplied to each sub pixel. Accordingly, each sub pixel can be independently turned on/off, whereby a gray scale can be implemented by each pixel 20 even when the display signal is digital data.

Liquid crystal display device 100 can implement a gray scale with a greater number of tones because of a sub pixel connection circuit 25 arranged between sub pixels SPX1 and SPX2.

Sub pixel connection circuit 25 includes: a sub pixel connection switch SWa connecting the pixel electrode nodes of sub pixels SPX1 and SPX2 in accordance with the potential level of a connection control node Nc; and a connection control switch SWb connecting second data line 65 and connection control node Nc in accordance with the potential level of vertical scanning line 70.

This enables a sub pixel connection signal to be incorporated into connection control node Nc from second data line 65 at a timing designated by activation of vertical scanning line 70 and, accordingly, connection between the sub pixels can be controlled.

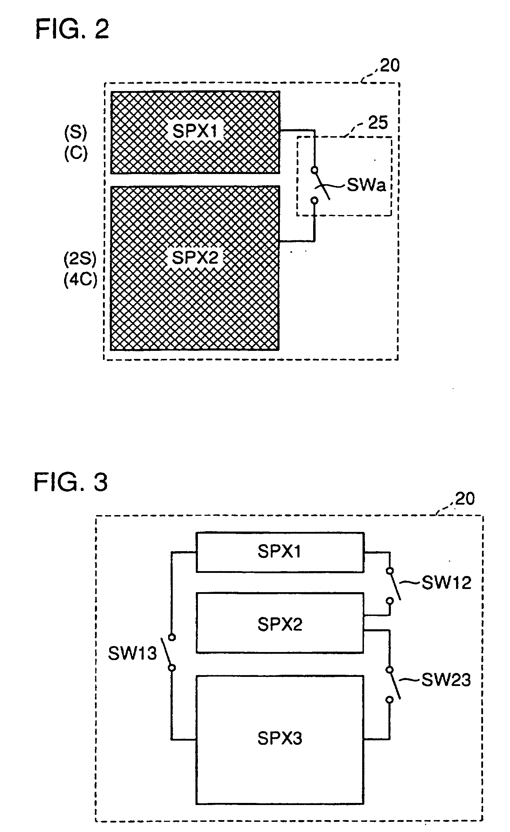

Fig. 2 shows a diagram used for explaining a concept of connection between the sub pixels in liquid crystal display device 100.

Referring to Fig. 2, sub pixels SPX1 and SPX2 are different in display area. Here, a display area ratio of sub pixels SPX1 to SPX2 is S:2S in Fig. 2, by way of example. A ratio of capacitance values of the sub pixels is C: 4C. Here, the capacitance value of the sub pixels is calculated as a sum of the capacitances of storage capacity 23 and liquid crystal display element 22.

First, if sub pixel is SPX1 is turned on to write a potential V to the pixel electrode node and sub pixel SPX2 is turned off, the potential at the pixel electrode node (hereinafter simply referred to as a pixel electrode potential) of sub pixel SPX is V and the pixel electrode potential of sub pixel SPX2 is 0.

Assume that the luminance of each sub pixel is in proportion to a product of the pixel electrode potential and the display area. Then, the luminance of the pixel before connecting the sub pixels is expressed as follows.

$$V \times S + 0 \times 2S = V \cdot S$$

Successively, if a positive voltage is applied to the second data line in a period in which a positive voltage is supplied to the vertical scanning line corresponding to connection control switch SWb, sub pixel connection switch SWa is turned on and the pixel electrodes of the sub pixels are connected. Accordingly, electric charges are reallocated to sub pixels SPX1 and SPX2, so that the potentials of the pixel electrodes of the sub pixels change.

Namely, if the pixel electrode potential of the sub pixels after the connection is V', the following equation (1) is obtained.

$$V' \times (C + 4C) = V \times C + 0 \times 4C \qquad (1)$$

From equation (1), an equation V' = V/5 is derived. Accordingly, the potential level of the pixel electrode of sub pixel SPX1 changes from V to V/5, whereas the potential level of the pixel electrode of sub pixel SPX2 changes from 0 to V/5.

The luminance after the connection of the sub pixels is expressed by the following equation. Thus, another tone may be derived by connecting the sub pixels.

$$V/5 \times S + V/5 \times 2S = 3/5 \cdot V \cdot S$$

Then, assume that on and off states of sub pixels SPX1 and SPX2 are interchanged. More specifically, assume that sub pixel SPX2 is turned on to write a potential V to the pixel electrode node and the pixel electrodes of the sub pixels are connected after turning off sub pixel SPX1.

Similarly, if the luminance of each sub pixel is in proportion to a product of the pixel electrode potential and the display area, the luminance of the pixel before the connection of the sub pixels is as follows.

$$0 \times S + V \times 2S = 2 \cdot V \cdot S$$

Likewise, if pixel electrode potential after the connection is V', the following equation (2) is obtained rather than the above equation (1).

$$V' \times (C + 4C) = 0 \times C + V \times 4C \qquad (2)$$

An equation of V' = 4/5 ·V is derived from the equation (2). Thus, the potential level of the pixel electrode of sub pixel SPX1 changes from 0 to 4/5 ·V, whereas the potential level of the pixel electrode of sub pixel SPX2 changes from V to 4/5 ·V.

On the other hand, the luminance after the connection of the sub pixels can be expressed by the following equation.

$$4/5 \cdot V \times S + 4/5 \cdot V \times 2S = 12/5 \cdot V \cdot S$$

As described above, another tone can newly be derived by the connection of the sub pixels.

As in the foregoing, the pixel divided into sub pixel SPX1 (area S, capacitance C) and sub pixel SPX2 (area 2S, capacitance 4C) can implement the gray scale in the following cases.

(1) SPX1 and SPX2 are both turned off (0),
(2) Only SPX1 is turned on (S V),
(3) Only SPX2 is turned on (2·S·V), and
(4) SPX1 and SPX2 are both turned on (3·S·V. In addition to the above four tones, the above described two types of connections of the sub pixels can implement two intermediate tones in the following cases.
(5) The sub pixels are connected after turning on only sub pixel SPX1 ((3/5) · V·S), and
(6) The sub pixels are connected after turning on only sub pixel SPX2 ((12/5) · VS). Consequently, a greater number of tones can be implemented without increasing the number of sub pixels of each pixel.

As is apparent from the above example, a greater number of intermediate tones can be implemented if the display areas and capacitance values of the sub pixels are different. The number of intermediate tones implemented by the connection of the sub pixels can be adjusted by the area ratio and capacitance ratio of the sub pixels.

In the above description, each pixel is divided into two sub pixels in liquid crystal display device 100. However, each pixel may be divided into a plurality of, for example, at least three sub pixels.

Fig. 3 is a diagram used for explaining a concept of connection between the sub pixels when each pixel is divided into three sub pixels.

Referring to Fig. 3, when each pixel is divided into three sub pixels SPX1 to SPX3, a greater number of gradation tones can be implemented by arranging between the sub pixels switches SW12, SW23 and SW13, which can independently be turned on/off.

In this case, similarly, the sub pixels and sub pixel control switches SW12, SW23 and SW13 are arranged in a matrix and controlled in synchronization with the vertical and horizontal scanning lines.

## Second Embodiment

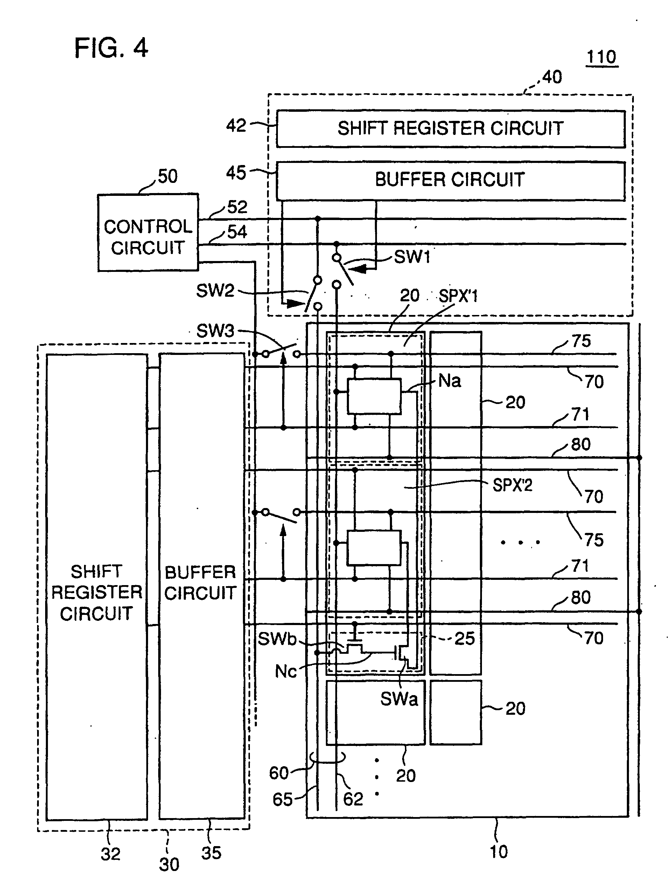

Fig. 4 shows a schematic block diagram showing a structure of a liquid crystal display device 110 according to the second embodiment of the present invention.

Referring to Fig. 4, liquid crystal display device 110 is different from liquid crystal display device 100 according to the first embodiment in the structure of sub pixels. A sub vertical scanning line 71, image signal line 75 and switches SW3 are arranged in addition to vertical scanning line 70, corresponding to each row of sub pixels.

Sub vertical scanning lines 71 are sequentially activated with a prescribed period by vertical scanning circuit 30. Upon activation, a positive voltage is applied to sub vertical scanning line 71 as in the case of vertical scanning line 70.

Switch SW3 is turned on in response to the activation of sub vertical scanning line 71 for transmitting a reference potential generated by a control circuit 50 to an image signal line 75. Note that a structure where the reference potential is always supplied to each image signal line 75 without arranging SW3 may be possible.

The other parts of the structure are the same as those of Fig. 1, and therefore description thereof will not be repeated.

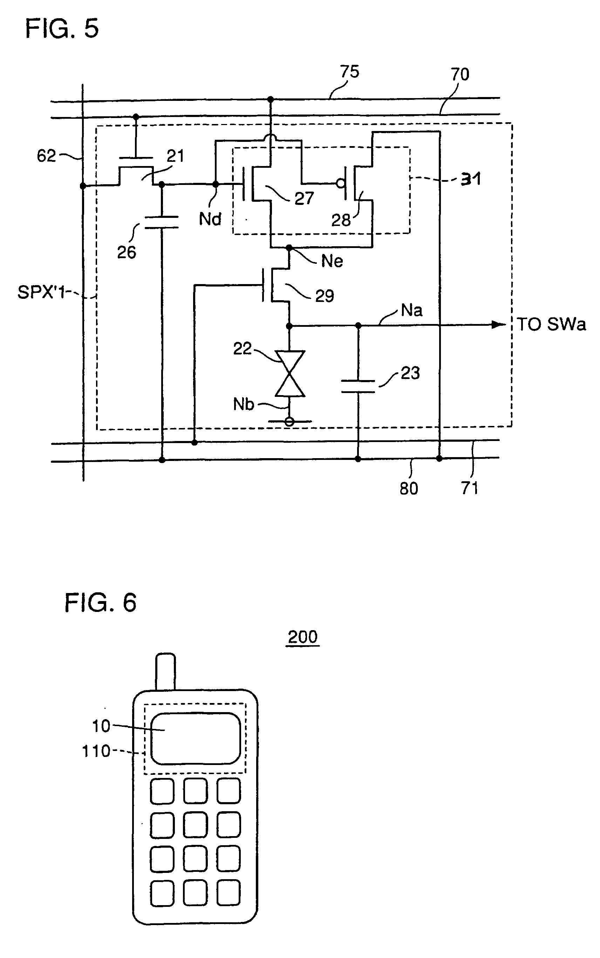

Fig. 5 shows a circuit diagram used for explaining a structure of a sub pixel according to the second embodiment.

Referring to Fig. 5, a sub pixel SPX'1 according to the second embodiment is different from sub pixel SPX1 of the first embodiment in that it includes a capacitor for control 26, connection switching circuit 31 having TFT elements 27 and 28, and TFT element 29 used as a switch element.

Capacitor for control 26 is connected between internal node Nd, which is connected to first data line 62 through TFT element 21 upon activation of vertical scanning line 70, and a common line 80.

TFT element 27 is an n type, has its gate connected to internal node Nd, and electrically connected between image signal line 75 and internal node Ne. TFT element 28 has a conductivity type different from that of TFT element 27 and is turned on in a complementary manner with respect to TFT element 27 in accordance with the potential level of internal node Nd. TFT element 28 has its gate connected to internal node Nd and is electrically connected to common line 80 and internal node Ne.

TFT elements 27 and 28 are turned on/off in accordance with the potential level of internal node Nd in a complementary manner, so that connection switch circuit 31 connects one of pixel signal line 75 and common line 80 to internal node Ne in accordance with the potential level of internal node Nd.

A TFT element 29 has its gate connected to sub vertical scanning line 71 and is electrically connected between internal node Ne and pixel electrode node Na.

Thus, one of pixel signal line 75 and common line 80 is connected to pixel electrode node Na in accordance with the potential level of internal node Nb during activation of sub vertical scanning line 71.

As in the case of the above described sub pixel SPX1, the potential level at pixel electrode node Na is retained by storage capacitor 23.

In sub pixel SPX'1, a display signal indicating the on/off state of the sub pixel is transmitted by first data line 62 and further to internal node Nd in response to the on state of TFT element 21 and held at capacitor control 26. Accordingly, when the next row is scanned and corresponding vertical scanning line 70 is inactivated, the once applied potential level is retained at internal node Nd.

When the potential level held at internal node Nd is at an H level and turning on of sub pixel SPX'1 is designated, the on state of TFT element 27 is maintained. Thus, upon activation of sub vertical scanning line 71, pixel electrode node Na and pixel signal line 75 are connected. Conversely, when 0 or a negative voltage is retained at internal node Nd, and turning off of sub pixel SPX'1 is designated, TFT element 28 is turned on in a complementary manner with respect to TFT element 27. Upon activation of sub vertical scanning line 71, pixel electrode node Na and common line 80 are connected.

As described above, pixel electrode node Na holds an instruction of turning on/off to the sub pixel at capacitor for control 26 for periodically connecting one of pixel signal line 75 and common line 80 to pixel electrode node Na upon activation of sub vertical scanning line 71. As a result, in continuously displaying the same image, a writing operation at a high operation frequency for driving the vertical and horizontal scanning lines is not performed after the instruction of turning on/off each sub pixel corresponding to the same image is once held at capacitor for control 26. Rather, sub vertical scanning line 71 is periodically activated at a low operation frequency to continuously display a desired image.

Consequently, power consumption of the horizontal and vertical circuits can be reduced in continuously displaying the same image.

Moreover, since the connection of pixel signal line 75 and common line 80 to pixel electrode node Na is maintained, the potential level of pixel electrode node Na does not change and reflectance (luminance) does not change.

Here, the reference potential transmitted by pixel signal line 75 is set such that the potential written to the pixel electrode is at a first potential level obtained by adding a liquid crystal driving voltage to a potential level of the opposite substrate (common electrode), or a second potential level obtained by subtracting the liquid crystal driving voltage from the potential level of the opposite substrate (common electrode), so as to maximize the reflectance (the reflectance is minimized in a so called normally white mode) of the liquid crystals in the sub pixel which has been instructed to be turned on. By periodically switching between the first and second potential levels of different polarities for use as the reference potential, a problem is avoided which is associated with image sticking of orientation of the liquid crystals due to constant application of a potential in the same direction.

Further, if the potential level transmitted by common line 80 is set such that the level of a potential written to the pixel electrode equals to that of the opposite substrate (common electrode), the reflectance of the liquid crystals in the sub pixel instructed to be turned off is minimized (maximized in the normally white mode). Thus, the contrast of the sub pixels, respectively instructed to be turned on and off, can be maximized.

Accordingly, in the liquid crystal display device according to the second embodiment, connection of the pixel electrodes of the sub pixels can be implemented and the on/off instruction with respect to the sub pixel can be held in the sub pixel, so that reduction in power consumption is achieved when continuously displaying the same image.

Further, a structure of the sub pixel capable of stably outputting maximum luminance and minimum luminance enables a multiple-gray scale operation with excellent contrast.

Modification of Second Embodiment

Fig. 6 is an illustration showing a portable telephone 200 according to the modification of the second embodiment.

Referring to Fig. 6, portable telephone 200 is provided with a liquid crystal display device 110 according to the second embodiment. A display portion of the portable telephone is formed by a liquid crystal display portion 10 of liquid crystal display device 110. Thus, the sub pixel of the display portion has the same structure as that of Fig. 5. Consequently, reduction in power consumption is achieved when continuously displaying the same image.

This characteristic is ideal for the portable telephone required to consume less power in a so called wait mode. Portable telephone 200 with liquid crystal display device 110 of the second embodiment can implement multiple-gray scale based on digital data without impairing a display quality such as resolution and prolong the battery life by consuming less power.

Fig. 7 is an illustration showing a portable digital assistance device 210 according to the modification of the second embodiment.

Referring to Fig. 7, as in portable telephone 200, portable digital assistance device 210 is also provided with liquid crystal display device 110 of the second embodiment. Accordingly, reduction in power consumption is achieved when continuously displaying the same image.

Therefore, portable digital assistance device 210 can implement multiple-gray scale based on digital data without impairing a display quality such as resolution and prolong the battery life by consuming less power.

Although the present invention has been described and illustrated in detail, it is clearly understood that the same is by way of illustration and example only and is not to be taken by way of limitation, the scope of the present invention being limited only by the terms of the appended claims.

**Claims**

1. A liquid crystal display device, comprising:

   - a plurality of pixels (20) arranged in a matrix of rows and columns of pixels with each of the plurality of pixels including M, M being a natural number of at least 2, sub pixels (SPX1, SPX2) and (M!/2(M-2)!) sub pixel connection circuits (25);
   - a plurality of vertical scanning lines (70), and a plurality of horizontal scanning lines (60), wherein each vertical scanning line (70) corresponds to a different row of sub pixels or sub pixel connection circuits, and each of the plurality of horizontal scanning lines corresponds to a different column of pixels, and
   - wherein each horizontal scanning line includes at least a first data line (62) and a second data line (65);

   wherein each of the sub pixels includes:

   (I) a liquid crystal display element (22), and a common electrode (Nb) and a pixel electrode (Na) respectively arranged on opposite sides of the liquid crystal display element (22);
   (II) a first TFT element (21) having its first gate electrode electrically coupled to the respective vertical scanning line (70), its second electrode electrically coupled to the first data line (62), and its third electrode coupled to the pixel electrode (Na) of the liquid crystal element (22) of the sub pixel;

   and wherein each of the sub pixel connection circuits includes:

   - a second TFT element (SWb) and a third TFT element (SWa);
   - wherein the second TFT element (SWb) has its gate electrode electrically coupled to the respective vertical scanning line (70), its second electrode electrically coupled to the second data line (65), and its third electrode electrically coupled to a gate electrode of the third TFT element (SWa), and wherein the third TFT element has its second electrode electrically coupled to the pixel electrode (Na) of the first sub pixel of the pixel and its third electrode electrically coupled to the pixel electrode (Na) of a second sub pixel of the pixel;
   - wherein the first data line transmits a level of a potential applied to the pixel electrode, the second data line transmits a signal for controlling the third TFT element, and the vertical scanning line transmits a signal for controlling the first TFT element or the second TFT element.

2. The device according to claim 1, wherein the first data line (62) transmits one of a potential corresponding to the common electrode (Nb) and a potential of which the potential difference with respect to the potential level of the common electrode (Nb) corresponds to a driving voltage of the liquid crystal display element (22).

3. The device according to any of claims 1 or 2, wherein the M sub pixels (SPX1, SPX2) have different display areas.

4. The device according to any of claims 1 to 3, wherein each of the sub pixels (SPX1, SPX2) further includes a storage capacitor (23) connected in parallel with the liquid crystal display element (22), and each of the M sub pixels has a different capacitance of the liquid crystal display element (22) and the storage capacitor (23).

5. The device according to any of claims 1 to 4, further comprising:

- a plurality of sub vertical scanning lines (71), a plurality of first reference potential lines (80), and a plurality of second reference potential lines (75), wherein each sub vertical scanning line (71), first reference potential line (80), and second reference potential line (75) corresponds to a different row of sub pixels;
- and wherein each of the sub pixels (25) includes further a connection switch circuit containing a fourth TFT element (27) and a fifth TFT element (28) of opposite conductivity types, wherein
- the fourth TFT element has its gate electrode electrically coupled to the third electrode of the first TFT element (21), its second electrode electrically coupled to the second reference potential line (75), and
- the fifth TFT element (28) has its gate electrode electrically coupled to the third electrode of the first TFT element (21), its second electrode electrically coupled to the first reference potential line (80);
- a sixth TFT element (29) having its gate electrode electrically coupled to the sub vertical scanning line (71), its second electrode electrically coupled to the pixel electrode (Na) of the liquid crystal element (22) of the sub pixel, and its third electrode electrically coupled to the third electrode of the fourth and fifth TFT element (27, 28);
- and a capacitor (26) for retaining a potential level at the gates of the fifth and sixth TFT elements.

6. The device according to claim 5, wherein the first reference potential line (80) transmits a potential corresponding to the common electrode, and the second reference potential line (75) transmits a potential of which the potential difference with respect to the potential level at the common electrode corresponds to a driving voltage of the liquid crystal display element (22).

7. The device according to any of claims 1 to 6 comprising in addition a scanning circuit (30, 40) for applying a level of a potential to the first data line (62) and signals for controlling to the second data line (65) and the vertical scanning line (70) in order to implement a gray scale based on digital data for each pixel.

8. Use of a liquid crystal display device according to any of claims 1 to 7 in a portable telephone.

9. Use of a liquid crystal display device according to any of claims 1 to 7 in a portable digital assistance device.

**Patentansprüche**

1. Flüssigkristall-Anzeigevorrichtung, die folgendes aufweist:

- eine Vielzahl von Pixeln (20), die in Form einer Matrix aus Zeilen und Spalten von Pixeln angeordnet sind, wobei jedes Pixel der Vielzahl von Pixeln M Unterpixel (SPX1, SPX2) und (M!/2 (M-2)!) Unterpixel-Verbindungsschaltungen (25) beinhaltet, wobei M eine natürliche Zahl von mindestens 2 ist;
- eine Vielzahl von Vertikalabtastleitungen (70) und eine Vielzahl von Horizontalabtastleitungen (60), wobei jede Vertikalabtastleitung (70) einer anderen Zeile von Unterpixeln oder Unterpixel-Verbindungsschaltungen entspricht und jede der Vielzahl von Horizontalabtastleitungen einer anderen Spalte von Pixeln entspricht, und
- wobei jede Horizontalabtastleitung mindestens eine erste Datenleitung (62) und eine zweite Datenleitung (65) beinhaltet;

wobei jedes der Unterpixel folgendes beinhaltet:

(I) ein Flüssigkristall-Anzeigeelement (22) sowie eine Gemeinschaftselektrode (Nb) und eine Pixelelektrode (Na), die jeweils auf gegenüberliegenden Seiten des Flüssigkristall-Anzeigeelements (22) angeordnet sind;
(II) ein erstes TFT-Element (21), dessen erste Gateelektrode mit der jeweiligen Vertikalabtastleitung (70) elektrisch gekoppelt ist, dessen zweite Elektrode mit der ersten Datenleitung (62) elektrisch gekoppelt ist und dessen dritte Elektrode mit der Pixelelektrode (Na) des Flüssigkristall-Anzeigeelements (22) des Unterpixels elektrisch gekoppelt ist;

und wobei jede der Unterpixel-Verbindungsschaltungen folgendes aufweist:

- ein zweites TFT-Element (SWb) und ein drittes TFT-Element (SWa);
- wobei das zweite TFT-Element (SWb) mit seiner Gateelektrode mit der jeweiligen Vertikalabtastleitung (70) elektrisch gekoppelt ist, mit seiner zweiten Elektrode mit der zweiten Datenleitung (65) elektrisch gekoppelt ist und mit seiner dritten Elektrode mit einer Gateelektrode des dritten TFT-Elements (SWa) elektrisch gekoppelt ist und wobei das dritte TFT-Element mit seiner zweiten Elektrode mit der Pixelelektrode (Na) des ersten Unterpixels des Pixels elektrisch gekoppelt ist und mit seiner dritten Elektrode mit der Pixelelektrode (Na) eines zweiten Unterpixels des Pixels elektrisch gekoppelt ist;

- wobei die erste Datenleitung einen Pegel eines an die Pixelelektrode angelegten Potentials überträgt, die zweite Datenleitung ein Signal zum Steuern des dritten TFT-Elements überträgt und die Vertikalabtastleitung ein Signal zum Steuern des ersten TFT-Elements oder des zweiten TFT-Elements überträgt.

2. Vorrichtung nach Anspruch 1,
   wobei die erste Datenleitung (62) ein Potential überträgt von einem Potential, das der Gemeinschaftselektrode (Nb) entspricht, und einem Potential, dessen Potentialdifferenz in bezug auf den Potentialpegel der Gemeinschaftselektrode (Nb) einer Treiberspannung des Flüssigkristall-Anzeigeelements (22) entspricht.

3. Vorrichtung nach einem der Ansprüche 1 oder 2,
   wobei die M Unterpixel (SPX1, SPX2) unterschiedliche Anzeigeflächen aufweisen.

4. Vorrichtung nach einem der Ansprüche 1 bis 3,
   wobei jedes der Unterpixel (SPX1, SPX2) weiterhin einen Speicherkondensator (23) aufweist, der dem Flüssigkristall-Anzeigeelement (22) parallel geschaltet ist, und
   wobei jedes der M Unterpixel eine andere Kapazität als das Flüssigkristall-Anzeigeelement (22) und der Speicherkondensator (23) aufweist.

5. Vorrichtung nach einem der Ansprüche 1 bis 4,
   die ferner folgendes aufweist:

   - eine Vielzahl von untergeordneten Vertikalabtastleitungen (71), eine Vielzahl von ersten Referenzpotentialleitungen (80) und eine Vielzahl von zweiten Referenzpotentialleitungen (75), wobei jede untergeordnete Vertikalabtastleitung (71), jede erste Referenzpotentialleitung (80) und jede zweite Referenzpotentialleitung (75) einer anderen Zeile von Unterpixeln entspricht;
   - und wobei jedes der Unterpixel (25) ferner einen Verbindungsschaltkreis beinhaltet, der ein viertes TFT-Element (27) und ein fünftes TFT-Eelment (28) von entgegengesetzten Leitfähigkeits-Typen enthält, wobei
   - das vierte TFT-Element mit seiner Gateelektrode mit der dritten Elektrode des ersten TFT-Elements (21) elektrisch gekoppelt ist und mit seiner zweiten Elektrode mit der zweiten Referenzpotentialleitung (75) elektrisch gekoppelt ist, und
   - das fünfte TFT-Element (28) mit seiner Gateelektrode mit der dritten Elektrode des ersten TFT-Elements (21) elektrisch gekoppelt ist und mit seiner zweiten Elektrode mit der ersten Referenzpotentialleitung (80) elektrisch gekoppelt ist;

- ein sechstes TFT-Element (29), das mit seiner Gateelektrode mit der untergeordneten Vertikalabtastleitung (71) elektrisch gekoppelt ist, mit seiner zweiten Elektrode mit der Pixelelektrode (Na) des Flüssigkristall-Anzeigeelements (22) des Unterpixels elektrisch gekoppelt ist und mit seiner dritten Elektrode mit der dritten Elektrode des vierten und des fünften TFT-Elements (27; 28) elektrisch gekoppelt ist;
- und einen Kondensator (26) zum Halten eines Potentialpegels an den Gates des fünften und des sechsten TFT-Elements.

6. Vorrichtung nach Anspruch 5,
   wobei die erste Referenzpotentialleitung (80) ein Potential überträgt, das der Gemeinschaftselektrode entspricht, und
   wobei die zweite Referenzpotentialleitung (75) ein Potential überträgt, dessen Potentialdifferenz in bezug auf den Potentialpegel an der Gemeinschaftselektrode einer Treiberspannung des Flüssigkristall-Anzeigeelements (22) entspricht.

7. Vorrichtung nach einem der Ansprüche 1 bis 6,
   ferner mit einer Abtastschaltung (30, 40) zum Anlegen eines Potentialpegels an die erste Datenleitung (62) sowie von Signalen zum Steuern an die zweite Datenleitung (65) und die Vertikalabtastleitung (70), um eine Grauwertskala auf der Basis von digitalen Daten für jedes Pixel zu schaffen.

8. Verwendung einer Flüssigkristall-Anzeigevorrichtung nach einem der Ansprüche 1 bis 7 in einem Mobiltelefon.

9. Verwendung einer Flüssigkristall-Anzeigevorrichtung nach einem der Ansprüche 1 bis 7 in einem tragbaren digitalen Hilfsvorrichtung.

**Revendications**

1. Dispositif d'affichage à cristal liquide, comprenant :

   - une pluralité de pixels (20) disposés sur une matrice de lignes et de colonnes de pixels, dont chacune possède une pluralité de pixels incluant M, M étant un entier naturel égal au moins à 2, sous-pixels (SPX1, SPX2) et (M!/2 (M-2)!) circuits (25) de connexion de sous-pixels;
   - une pluralité de lignes de balayage vertical (70) et une pluralité de lignes de balayage horizontal (60), chaque ligne de balayage vertical (70) correspondant à une ligne différente de sous-pixels ou de circuits de connexion de sous-pixels, chacune de la pluralité de lignes de balayage horizontal correspondant à une pluralité de colonnes différentes de pixels, et

- dans lequel chaque ligne de balayage horizontal inclut au moins une première ligne de données (62) et une seconde ligne de données (65);

dans lequel chacun des sous-pixels inclut :

(I) un élément d'affichage à cristal liquide (22), et une électrode commune (Nb) et une électrode de pixel (Na) disposées respectivement sur les côtés opposés de l'élément d'affichage à cristal liquide (22);
(II) un premier élément TFT (21) dont la première électrode de grille est couplée électriquement à la ligne respective de balayage vertical (70), dont la seconde électrode est couplée électriquement à la première ligne de données (62) et dont la troisième électrode est couplée à l'électrode de pixel (Na) de l'élément en cristal liquide (22) du sous-pixel;

et dans lequel chacun des circuits de connexion de sous-pixels inclut :

- un second élément TFT (SWb) et un troisième élément TFT (SWa);

dans lequel l'électrode de grille du second élément TFT (SWb) est couplé électriquement à la ligne respective de balayage vertical (70), sa seconde électrode est couplée électriquement à la seconde ligne de données (65) et sa troisième électrode est couplée électriquement à l'électrode de grille du troisième élément TFT (SWa), et dans lequel la seconde électrode du troisième élément TFT est couplée électriquement à l'électrode de pixel (Na) du premier sous-pixel du pixel et sa troisième électrode est couplée électriquement à l'électrode de pixel (Na) d'un second sous-pixel du pixel;

- dans lequel la première ligne de données transmet un niveau d'un potentiel appliqué à l'électrode de pixels, la seconde ligne de données transmet un signal pour la commande du troisième élément TFT et la ligne de balayage vertical transmet un signal pour la commande du premier élément TFT ou du second élément TFT.

2. Dispositif selon la revendication 1, dans lequel la première ligne de données (62) transmet un potentiel correspondant à l'électrode commune (Nb) et un potentiel, dont la différence par rapport à un niveau de potentiel de l'électrode commune (Nb) correspond à une tension de commande de l'élément d'affichage à cristal liquide (22).

3. Dispositif selon l'une quelconque des revendications 1 ou 2, dans lequel M sous-pixels (SPX1, SPX2) possèdent des zones d'affichage différentes.

4. Dispositif selon l'une quelconque des revendications 1 à 3, dans lequel chacun des sous-pixels (SPX1, SPX2) comprend en outre un condensateur de stockage (23) connecté en parallèle avec l'élément d'affichage à cristal liquide (22), et chacun des M sous-pixels possède une capacité différente de l'élément d'affichage à cristal liquide (22) et du condensateur de stockage (23).

5. Dispositif selon l'une quelconque des revendications 1 à 4, comprenant en outre :

- une pluralité de lignes secondaires de balayage vertical (71), une pluralité de premières lignes de potentiel de référence (80) et une pluralité de secondes lignes de potentiel de référence (75), chaque ligne secondaire de balayage vertical (71), première ligne de potentiel de référence (80) et seconde ligne de potentiel de référence (75) correspondant à une ligne différente de sous-pixels;
- et chacun des sous-pixels (25) inclut en outre un circuit de commutation de connexion contenant un quatrième transistor TFT (27) et un cinquième transistor TFT (28) ayant des types de conductivité opposés, et dans lequel
- l'électrode de grille du quatrième élément TFT est couplée électriquement à la troisième électrode du premier élément TFT (21), et sa seconde électrode est couplée électriquement à la seconde ligne de potentiel de référence (75);
et
- l'électrode de grille du cinquième élément TFT (28) est couplée électriquement à la troisième électrode du premier élément TFT (21), et sa seconde électrode est couplée électriquement à la première ligne de potentiel de référence (80);
- un sixième élément TFT (29), dont l'électrode de grille est couplée électriquement à la ligne secondaire de balayage vertical (61), dont la seconde électrode est couplée électriquement à l'électrode de pixel (Na) de l'élément à cristal liquide (22) du sous-pixel et dont la troisième électrode est couplée électriquement à la troisième électrode des quatrième et cinquième élément TFT (27,28);
- et un condensateur (26) pour maintenir un niveau de potentiel au niveau des grilles des cinquième et sixième éléments TFT.

**6.** Dispositif selon la revendication 5,
dans lequel la première ligne de potentiel de référence (80) transmet un potentiel correspondant à l'électrode commune, et
la seconde ligne de potentiel de référence (75) transmet un potentiel, dont la différence de potentiel par rapport au niveau de potentiel de l'électrode commune correspond à une tension de commande de l'élément d'affichage à cristal liquide (22).

**7.** Dispositif selon l'une quelconque des revendications 1 à 6,
comprenant en outre un circuit de balayage (30,40) pour appliquer un niveau d'un potentiel à la première ligne de données (62) et des signaux de commande à la seconde ligne de données (65) et à la ligne de balayage vertical (70) pour réaliser une échelle de gris sur la base de données numériques pour chaque pixel.

**8.** Utilisation d'un dispositif d'affichage à cristal liquide selon l'une quelconque des revendications 1 à 7 dans un téléphone portable.

**9.** Utilisation d'un dispositif d'affichage à cristal liquide selon l'une quelconque des revendications 1 à 7 dans un dispositif d'assistance numérique portable.

# FIG. 1

## FIG. 2

## FIG. 3

# FIG. 4

110

40

42 — SHIFT REGISTER CIRCUIT

45 — BUFFER CIRCUIT

50
CONTROL
CIRCUIT

52
54

SW1

SW2

SW3

20    SPX'1

75
70
20
71
80

SPX'2
70
75
71
80
70

SHIFT
REGISTER
CIRCUIT

BUFFER
CIRCUIT

SWb
Nc

Na

25

SWa

20

60
65    62
20

32    35
30

10

FIG. 5

FIG. 6

## FIG. 7

_210_

110

10

## FIG. 8

_500_

1007 — SHIFT REGISTER CIRCUIT

1008 — BUFFER CIRCUIT

1013

1009

1006

1005

1010

1001

1002

R G B

1012

1010

SHIFT REGISTER CIRCUIT

BUFFER CIRCUIT

R G B

1012

1004

1003

1005

1011

## FIG. 9

## FIG. 10